Europäisches Patentamt

European Patent Office

Office européen des brevets

(19)

(11) Publication number: **0 308 024 B1**

# EUROPEAN PATENT SPECIFICATION

(12)

(45) Date of publication of patent specification: **01.07.92**    (51) Int. Cl.⁵: **C10J 3/50**, B01J 3/02

(21) Application number: **88201997.9**

(22) Date of filing: **13.09.88**

(54) **Compartmented gas injection device.**

(30) Priority: **18.09.87 US 98161**

(43) Date of publication of application:
**22.03.89 Bulletin 89/12**

(45) Publication of the grant of the patent:
**01.07.92 Bulletin 92/27**

(84) Designated Contracting States:
**DE GB IT NL**

(56) References cited:
**DD-A- 147 933**
**DE-A- 2 740 961**
**FR-A- 1 280 116**

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Dewitz, Thomas Shaun
3931 Manordale Drive
Houston Texas 77082(US)**
Inventor: **Salter, James Arthur
603 Whitehurst Court
Katy Texas 77450(US)**
Inventor: **McCusker, James Joseph
11906 Ouail Creek Drive
Houston Texas 77070(US)**
Inventor: **Scott, Andrew Michael
Badhuisweg 3
NL-1031 CM Amsterdam(NL)**
Inventor: **Dirkse, Hendricus Arien
Badhuisweg 3
NL-1031 CM Amsterdam(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 308 024 B1

## Description

The present invention relates to a feed vessel apparatus for maintaining a uniform mass flow rate of a pulverized coal and gas mixture discharged to a receiving coal gasification reactor, comprising: a pressurized vessel having at least one inlet port for introducing the said mixture into the vessel and having opening means for discharging said pulverized coal and gas mixture to the said reactor. In particular, this invention relates to pulverized coal discharged to a gasification reactor for the manufacture of synthesis gas.

Conventional coal feed systems using gravity flow of solids, such as coal feed to coal-fired boilers, can tolerate major fluctuations in the coal mass flow rate and suspension density.

Various devices have been built for discharging substances which tend to flow easily by gravity, such as grain. While devices such as those disclosed in U.S. Patent Specifications Nos. 3,289,396; 3,367,724; 4,529,336; 3,424,352; and 4,067,623 are concerned with providing "efficient discharge" of particulate materials from bulk storage tanks and avoiding bridging and incomplete discharging from such tanks, these devices do not maintain a uniform mass flow rate of particulate solids and gas mixture discharged in a uniform manner to a receiving coal gasification reactor as does the present invention.

It is therefore an object of the invention to provide an apparatus for maintaining a uniform mass flow-rate which overcomes the above problem.

The apparatus of the invention is therefore characterized in that the vessel is provided with at least one containing means having converging walls having an included angle of less than 150 degrees and converging towards at least one port formed at the apex thereof for discharging the mixture therefrom, wherein the walls form a portion of porous material having a maximum pore size of less than 7 mm; and wherein a jacket is mounted to form a substantially enclosed space between the walls of the containing means and the said jacket, said jacket having at least one outlet port in axial alignment with the discharge port of the containing means; and the jacket comprising means for isolating areas located outside and circumferentially about substantially adjacent portions of the porous material of the walls, said jacket further including means for selectively injecting gaseous fluids under pressure into the areas. In this manner a uniform flow of coal feed is provided to the coal gasification reactor.

The invention will now be described by way of example in more detail by reference to the accompanying drawings, in which:

Fig. 1 illustrates an embodiment of the invention;
Fig. 2 is a cross-section of the embodiment of fig. 1 taken along the line II-II;
Fig. 3 is an alternate embodiment of the present invention; and
Fig. 4 is another embodiment of the present invention.

Generation of synthesis gas occurs by partially combusting carbonaceous fuel, such as coal, at relatively high temperatures in the range of 800-2000 °C and at a pressure range of from about 1-200 bar in the presence of oxygen or oxygen-containing gases in a gasifier. Steam, carbon monoxide, carbon dioxide and oxygen-containing gases including air, oxygen- enriched air, and oxygen are optionally diluted with nitrogen and/or other inert gases.

In the present invention, the fuel and gas mixture is discharged from a feed vessel apparatus, advantageously having multiple outlets, each outlet being in communication with at least one burner associated with the gasifier. Typically, a gasifier will have burners in diametrically opposing positions. Generally, the burners have their discharge ends positioned to introduce the resulting flame and the agent of combustion into the gasifier.

Of particular importance in the manufacture of synthesis gas is the uniform manner in which the particulate fuel is introduced to the burners within the coal gasification reactor, hereinafter referred to as a gasifier. Fluctuations in the mass flow rate of coal being supplied to the burners of the gasifier are detrimental to gasifier's performance. For example, such fluctuations can cause inefficient combustion of fuel within the gasifier and damaging heat fluxes to the burner face which could result in thermal stresses on the burner face. If the mass flow rate of the particulate fuel fluctuates, zones of underheating are generated next to zones of overheating in the gasifier. As a result, in the zones of underheating the fuel is not completely gasified and in zones of overheating the fuel is completely converted into less valuable products, viz. carbon dioxide and water vapor. Additionally, locally high temperatures in the gasifier could damage the refractory lining which is normally arranged at the inner surface of the gasifier wall.

Since the residence time of the coal within the reaction zone of the reactor is approximately 400 milliseconds or less, the coal mass flow rate should advantageously be constant over periods of this order and over shorter periods to maintain constant local conditions.

Various factors substantially affect the mass flow rate of the fuel being supplied to the burners. In particular, the discharging of the particulate fuel from a feed vessel apparatus and the pneumatic transporting by conduit of the fuel from the vessel to the gasifier affect the mass flow rate of fuel to the gasifier. Specifically, fuel and gas mixtures having densities ranging from about 50-800 kg/m$^3$ transported through a conduit having a diameter less than 150 mm experience significant pressure drop due to the summation of various contributions such as frictional losses, restrictions, curvatures, etc. within the conduit.

The present invention utilizes a vessel having downwardly- converging walls at the lower end thereof forming a portion made of porous material having at least one port at the apex for aerating the solids within the vessel so as to maintain a uniform mass flow rate of the solids and gas mixture discharged to a gasifier. In particular, areas located circumferentially about the outside of the porous material portion are isolated to form closed compartments. Gaseous fluids are injected into each compartment at selected pressure and rate to maintain a uniform mass flow rate of a particulate solids and gas mixture discharged to the receiving gasifier. Furthermore, the interchangeability of porous material portions having different permeabilities provide greater flexibility for operating the process under varying conditions, such as different coal types, coal moisture content, etc.

An advantage of the present invention is that maintaining a uniform mass flow rate of a particulate solids and gas mixture to a gasifier prevents zones of underheating and overheating within the gasifier from occurring.

A further advantage of the present invention is protecting the refractory lining within the gasifier due to preventing zones of underheating and overheating.

An additional advantage of the present invention is more efficient utilization of fuel in the production of synthesis gas.

Another advantage of the present invention is the capability to maintain high suspension densities, e.g. greater than 200 kg/m$^3$, in the transport line from the vessel to the gasifier; thereby, reducing the consumption of aeration and pneumatic transport gas and avoiding dilution of the synthesis gas produced in the gasifier which would make the synthesis gas a less valuable product.

Although the invention is described hereinafter primarily with reference to pulverized coal, the method and apparatus according to the invention are also suitable for reactive solids and other finely divided solid fuels which could be partially combusted, such as lignite, anthracite, bituminous, brown coal, soot, petroleum coke, and the like. The size of solid carbonaceous fuel is such that 90% by weight of the fuel has a size of No. 6 mesh (A.S.T.M.). Advantageously, the size of solid carbonaceous fuel is such that 90 percent by weight of the fuel has a particle size smaller than 100 mesh (A.S.T.M.).

Additionally, the present invention can be used for both granular, pulverized, and powdered solids such as resins, catalysts, fly ash, and electrostatic precipitator fines.

Having thus generally described the apparatus and method of the present invention, as well as its numerous advantages over the art, the following is a more detailed description thereof, given in accordance with specific reference to the drawings. However, the drawing is of a process flow type in which auxiliary equipment, such as pumps, compressors, cleaning devices, etc. are not shown.

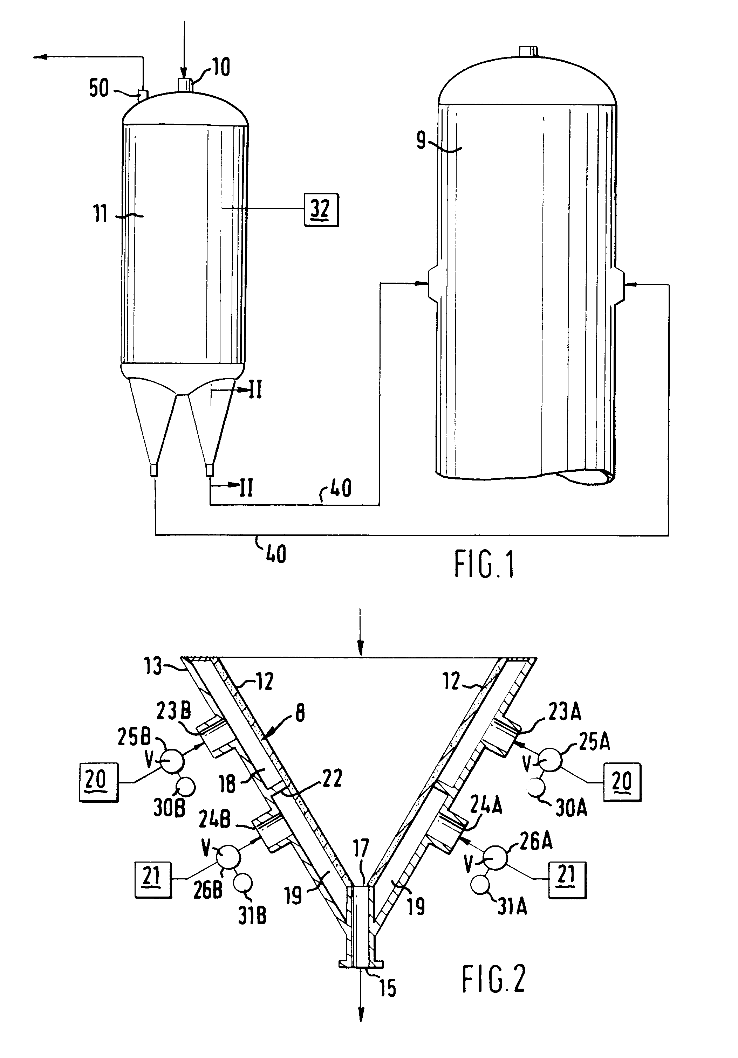

Referring to Figs. 1 and 2, an apparatus for maintaining a uniform mass flow rate of a particulate solids and gas mixture discharged from a holding vessel apparatus, such as a feed hopper 11 operated at elevated pressures of 1-200 bars, via conduit 40 to a receiving reactor, such as a gasifier 9, generally includes means for introducing the mixture, such as an inlet port 10, into first containing means 8 having converging walls 12 having an included angle of less than about 150 degrees, advantageously less than about 90 degrees, and converging toward at least one port 17 formed at the apex thereof for discharging the mixture therefrom. The walls 12 form a portion of porous material which may be metallic or nonmetalic, such as sintered stainless steel, woven stainless steel, or sintered ceramic, depending upon the operating conditions and type of coal used in the process. The porous material has a selected permeability and a maximum pore size of less than about 7 mm. The porous material facilitates the uniform distribution of gaseous fluid injected from pressurized sources 20, 21 into first containing means 8 and prevents bridging of the particulate solids discharged from the first containing means via the discharge port 17.

The pore size of the porous material of the walls 12 is based on, among other factors, the type of coal used. To allow greater operating flexibility to use various types of coal requiring differing pore sizes, the porous material portion of the first containing means 8 is advantageously interchangeable with another containing means having a different permeability than the first containing means 8.

Furthermore, introduction of the gaseous fluid into the pores of the porous material of walls 12 imparts a pressure restriction to the gaseous fluid thus ensuring an even flow distribution of the fluid throughout the walls 12 of the first containing means 8. Similarly, the porous material serves to control the bulk density of the mixture within the first containing means 8 and the discharge rate of the mixture leaving the hopper 11 via port 17.

A jacket 13 positioned at the lower end of the first containing means is mounted to form a substantially enclosed space between the walls 12 of the first containing means 8 and the jacket 13. The jacket 13 has at least one outlet port 15 at the lower end thereof which is in axial alignment with the discharge port 17 of the first containing means 8 for discharging particles therefrom.

Means for isolating areas, advantageously first and second areas 18, 19, respectively, located outside and circumferentially about substantially adjacent portions of the porous material of walls 12, such as a partition 22 within the substantially enclosed space between the jacket 13 and the porous material of walls 12, forms at least two substantially enclosed compartments. The jacket 13 includes means for selectively injecting gaseous fluid under pressure into first and second areas 18, 19, respectively, such as inlet ports 23A, 23B, and 24A, 24B, respectively, from pressurized fluid sources 20, 21 respectively. Although sources 20, 21 are shown as separate sources, it is recognized by those skilled in the art that gaseous fluid may be supplied from the same source.

The compartments formed within the substantially enclosed space between the walls 12 and the jacket 13 permit gaseous fluids, possibly having different densities, such as nitrogen or other inert gas and synthesis gas which is mainly carbon monoxide, hydrogen, and water, to be selectively injected into the compartments. The gas injected from source 20 into the first area 18 may be more, equal, or less dense than the gas injected from source 21 into second area 19. Advantageously, the gas injected into area 18 would be inert and the gas injected into area 19 would be synthesis gas. The gas injected into area 18 would flow upwards and could be vented to control the pressure in the feed hopper 11 whereas the gas injected into the area 19 flows advantageously downward and is transported to the gasifier 9.

The flow rate and direction of the gaseous fluid, for example nitrogen and synthesis gas, injected under pressure into the first and second areas 18, 19, respectively, are controlled at a rate sufficient to aerate the particulate solids in proximity to the portion of porous material of walls 12 but at a rate below that which would fluidize the particulate solids located above the porous material, such as by using 25A, 25B, 26A, and 26B, respectively.

It is undesirable to inject the gases at a rate sufficient to fluidize the particles above the porous material, as is typically done in conventional systems, because it results in more inert gas diluting the synthesis gas produced in the gasifier 9 and thus yielding a less valuable product. Also, it increases fluctuations of the mass flow rate of solids discharged from the coal feed hopper 11.

Additionally, the flow rates of the gaseous fluid from sources 20, 21 should not exceed the terminal falling velocity of the solids contained within the feed hopper 11. Terminal falling velocity is defined as the velocity at which the drag forces on a solid particle due to the flow of gases upward equals the downward force on the particle due to gravity. If the flow rates of the gases exceed the terminal falling velocity, then the solids will be discharged via the vent 50 rather than the discharge port 17.

Furthermore, the slip velocity, i.e. the velocity of the gas from sources 20, 21 relative to the coal, should advantageously be controlled at a rate which is below a minimum fluidization velocity of the particulate solids in feed hopper 11 above the porous portion, such as by using rotometers 30A, 30B, 31A, and 31B, respectively. Gaseous fluids from sources 20, 21 are injected at a selected rate which is at least substantially equal to the slip velocity of the gaseous fluids but below the minimum fluidization velocity of the particulate solids in the hopper 11 above the porous portion, say at least 2 mm/s for a hopper having a diameter of about 1 meter.

Advantageously, the flow rates of these gases from sources 20 and 21 are independently controllable which permits the separate control of the amount of gas flowing upward and the amount of gas flowing downward relative to the flow of the coal.

For example, for a uniform mass flow rate of particulate solids and gas mixture of 2000 kg/hr having a suspension density of 450 kg/m$^3$ discharged from the feed hopper 11, the rate of injecting nitrogen in the first area would be approximately 100 kg/hr. Should this rate be exceeded then the suspension density would be less than 450 kg/m$^3$ and the synthesis gas produced in the gasifier 9 would be diluted by the nitrogen from source 20. Additionally, should this rate be somewhat less than the selected rate then the suspension density would be substantially higher than 450 kg/m$^3$. Depending on the material and operating conditions, this situation could lead to less than stable flow.

Furthermore, the gaseous fluid may be injected in various directions and elevations to control the pressure and velocity profile which exit at the discharge port 17. Depending on the physical properties of the particles being transported, it may be necessary to have more than two compartments or to inject gas above the compartmented region.

This selective injection provides for separate control of the mixture density within the feed hopper 11 and the discharge density of the mixture leaving the hopper 11 via outlet port 15. As a result, the discharge port 15 of the hopper 11 is much smaller than conventional technologies for suspension densities of 200-500 kg/m$^3$.

The diameter of the discharge port 17 in the present invention is about 4 mm to at least substantially about 150 mm for a solids and gas mixture having a suspension density of about 200-500 kg/m$^3$. This diameter is larger than the maximum bridging diameter of the aerated particulate solids to prevent bridging of the solids as they exit the discharge port 17. Conventional coal feed systems using gravity flow of solids assisted by aeration to break up bridging typically have a suspension density of less than 200 kg/m$^3$ at the discharge outlet of the feed hopper 11 and a corresponding feed vessel apparatus discharge port diameter of greater than 150 mm. Diameters greater than 150 mm for a given mass flow rate used in the present invention are not desirable because either the velocity or suspension density would fall below the desired limits thus resulting in fluctuations of the mass flow rate of the coal and gas mixture to the gasifier 9.

Additionally, the smaller discharge diameter of the present invention in conjunction with the compartmented injection of gaseous fluids acts like a fluidic valve to control the particulate discharge rate and thereby eliminates the need for troublesome valves in transport hardware between the discharge of the hopper 11 and the gasifier 9.

Furthermore, the present invention may be provided with means for venting gas from the upper end of the hopper 11, say via port 50, for the purpose of maintaining an upward flow of gas through the solids in the feed hopper 11 of approximately 2mm/sec and thereby eliminate local bridging of the solids and provide smoother flow to the discharge port 17.

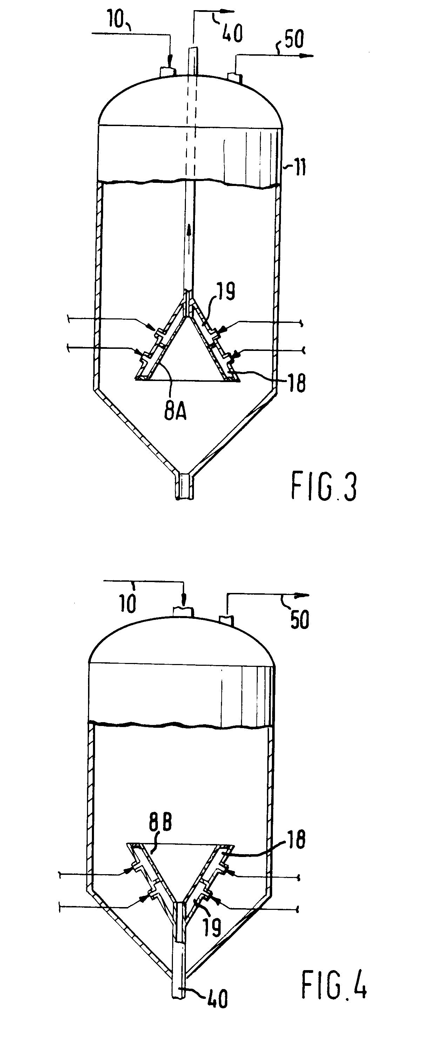

Alternatively, the present invention may incorporate first containing means 8A and 8B located inside the feed hopper 11 rather than at the lower end of the hopper 11 as shown in Figures 3 and 4, respectively. An advantage to the embodiment shown in Figure 3 is that the transport line 40 from the feed hopper 11 to the gasifier 9 would be shorter since the burners of the gasifier are located at an elevation above the gas injection device 19, for example of about 50 meter. A shorter transport line 40 provides more uniform flow of the coal to the burners of the gasifier 9.

Another advantage of the alternate embodiments shown in Figs. 3 and 4, for the multiple outlet feed hopper 11, is that the geometry of the hopper 11 is substantially simplified as a result of the first containing means 8A and 8B being located inside the hopper 11.

It would be recognized by one skilled in the art that references made with respect to the direction of flow of the gases and coal particles within the first containing means 8 of the embodiment described in Fig. 1 would be reversed when referring to the first containing means 8A shown in Fig. 3 since the first containing means 8A is inverted with respect to the first containing means 8 shown in Fig. 1.

The foregoing description of the invention is merely intended to be explanatory thereof, and various changes in the details of the described method and apparatus may be within the scope of the appended claims without departing from the spirit of the invention.

## Claims

1. A feed vessel apparatus for maintaining a uniform mass flow rate of a pulverized coal and gas mixture discharged to a receiving coal gasification reactor (9), comprising: a pressurized vessel (11) having at least one inlet port (10) for introducing the said mixture into the vessel (11) and having opening means (40) for discharging said pulverized coal and gas mixture to the said reactor (9), characterized in that the vessel (11) is provided with at least one containing means (8) having converging walls (12) having an included angle of less than 150 degrees and converging towards at least one port (17) formed at the apex thereof for discharging the mixture therefrom, wherein the walls (12) form a portion of porous material having a maximum pore size of less than 7 mm; and wherein a jacket (13) is mounted to form a substantially enclosed space between the walls (12) of the containing means (8) and the said jacket (13), said jacket (13) having at least one outlet port (15) in axial alignment with the discharge port (17) of the containing means (8); and the jacket (13) comprising means for isolating areas (18, 19) located outside and circumferentially about substantially adjacent portions of the porous material of the walls (12), said jacket further including means (23A, 23B; 24A, 24B) for selectively injecting gaseous fluids under pressure into the areas (18, 19).

2. The apparatus as claimed in claim 1, characterized in that the containing means (8) and the jacket (13) are located at the lower end of the vessel (11).

3. The apparatus as claimed in claim 1, characterized in that the containing means (8A, 8B) and the jacket (13) are located inside the vessel (11).

4. The apparatus as claimed in claim 3, characterized in that the containing means (8A) and the jacket (13) are inverted (apex directed to the upper part of the vessel (11)).

5. The apparatus as claimed in any one of claims 1-4, characterized in that the vessel (11) is provided with at least a port (50) for venting gas from the upper end of the vessel (11).

6. The apparatus as claimed in any one of claims 1-5, characterized by means for independently controlling the flow rate and direction of the gaseous fluid under pressure at a rate sufficient to fluidize the coal particles in proximity to the portion of porous material but at a rate below that which would fluidize the coal particles above the porous material.

7. The apparatus as claimed in any one of claims 1-6, characterized in that the diameter of the discharge port (17) is in the range of 4 mm to 150 mm for a pulverized coal and gas mixture having a suspension density of 200-500 kg/m$^3$.

## Revendications

1. Un dispositif d'alimentation à réservoir pour maintenir un débit massique uniforme d'un mélange de charbon pulvérisé et de gaz déchargé vers un réacteur récepteur (9) pour gazéification du charbon, comprenant : un réservoir sous pression (11) ayant au moins un orifice d'entrée (10) pour introduction du mélange dans le réservoir (11) et comportant des moyens d'ouverture (40) pour décharger vers le réacteur (9) le mélange de charbon pulvérisé et de gaz, caractérisé en ce que le réservoir (11) est pourvu d'au moins un récipient (8) ayant des parois convergentes (12) avec un angle inclus de moins de 150 degrés et convergeant vers au moins un orifice (17) formé au sommet pour déchargement du mélange de ce récipient, où les parois (12) forment une portion de matière poreuse ayant une grosseur maximale des pores de moins de 7 mm ; et où une enveloppe (13) est montée de manière à former un espace substantiellement clos entre les parois (12) du récipient (8) et l'enveloppe (13), cette enveloppe (13) ayant au moins un orifice de sortie (15) en alignement axial avec l'orifice de sortie (17) du récipient (8) ; et l'enveloppe (13) comprenant des moyens pour isoler des zones (18, 19) situées à l'extérieur et circonférentiellement autour de portions substantiellement adjacentes de la matière poreuse des parois (12), l'enveloppe comprenant en outre des moyens (23A, 23B ; 24A, 24B) pour injecter sélectivement des fluides gazeux sous pression dans les zones (18, 19).

2. Le dispositif selon la revendication 1, caractérisé en ce que le récipient (8) et l'enveloppe (13) sont situés à l'extrémité inférieure du réservoir (11).

3. Le dispositif selon la revendication 1, caractérisé en ce que les récipients (8A, 8B) et l'enveloppe (13) sont situés à l'intérieur du réservoir (11).

4. Le dispositif selon la revendication 3, caractérisé en ce que le récipient (8A) et l'enveloppe (13) sont renversés (sommet dirigé vers la partie supérieure du réservoir (11)).

5. Le dispositif selon l'une quelconque des revendications 1-4, caractérisé en ce que le réservoir (11) est pourvu d'au moins un orifice (50) pour faire sortir du gaz de l'extrémité supérieure du réservoir (11).

6. Le dispositif selon l'une quelconque des revendications 1-5, caractérisé par des moyens pour régler indépendamment le débit et la direction du fluide gazeux sous pression à un débit suffisant pour fluidiser les particules de charbon à proximité de la portion de matière poreuse, mais à un débit inférieur à celui qui fluidiserait les particules de charbon au-dessus de la matière poreuse.

7. Le dispositif selon l'une quelconque des revendications 1-6, caractérisé en ce que le diamètre de l'orifice de sortie (17) est compris entre 4 mm et 150 mm pour un mélange de charbon pulvérisé et de gaz ayant une masse volumique de la suspension de 200-500 kg/m$^3$.

## Patentansprüche

1. Beschickungsbehältervorrichtung zum Aufrechterhalten einer gleichmäßigen Massenflußrate eines Gemisches aus pulverisierter Kohle und Gas, welches an einen aufnehmenden Kohlevergasungsreaktor (9) abgegeben wird, umfassend:
einen unter Druck gesetzten Behälter (11), der wenigstens eine Einlaßöffnung (10) zum Einführen des genannten Gemisches in den Behälter (11) und eine Öffnungseinrichtung (40) hat zum Abgeben des Gemisches aus pulverisierter Kohle und Gas an den Reaktor (9), dadurch gekennzeichnet, daß der Behälter (11) mit wenigstens einer Aufnahmeeinrichtung (8) versehen ist, die konvergierende Wände (12) hat, die einen eingeschlossenen Winkel von kleiner als 150° haben und in Richtung gegen wenigstens eine Öffnung (17) konvergieren, die an ihrer Spitze gebildet ist zum Abgeben des Gemisches aus der Aufnahmeeinrichtung, wobei die Wände (12) einen Teil aus porösem Material bilden mit einer maximalen Porengröße von kleiner als 7 mm; ein Mantel (13) angebracht ist, um einen im wesentlichen umschlossenen Raum zwischen den Wänden (12) der Aufnahmeeinrichtung (8) und dem Mantel (13) zu bilden, der Mantel (13) wenigstens eine Auslaßöffnung (15) in axialer Ausrichtung mit der Abgabeöffnung (17) der Aufnahmeeinrichtung (8) hat; der Mantel (13) Mittel zum Isolieren von Bereichen (18, 19) aufweist, die auf der Außenseite und in Umfangsrichtung um im wesentlichen benachbarte Teile des porösen Materials der Wände (12) angeordnet sind, und wobei der Mantel weiterhin Mittel (23A, 23B; 24A, 24B) umfaßt zum wahlweisen Injizieren von gasförmigen Fluiden unter Druck in die genannten Bereiche (18, 19).

2. Vorrichtung nach Anspruch 1, dadurch gekennzeichnet, daß die Aufnahmeeinrichtung (8) und der Mantel (13) am unteren Ende des Behälters (11) angeordnet sind.

3. Vorrichtung nach Anspruch 1, dadurch gekennzeichnet, daß die Aufnahmeeinrichtung (8A, 8B) und der Mantel (13) im Inneren des Behälters (11) angeordnet sind.

4. Vorrichtung nach Anspruch 3, dadurch gekennzeichnet, daß die Aufnahmeeinrichtung (8A) und der Mantel (13) umgekehrt angeordnet sind (die Spitze ist zum oberen Teil des Behälters (11) gerichtet).

5. Vorrichtung nach irgendeinem der Ansprüche 1 bis 4, dadurch gekennzeichnet, daß der Behälter (11) mit wenigstens einer Öffnung (50) versehen ist zum Abgeben von Gas von dem Oberende des Behälters (11).

6. Vorrichtung nach irgendeinem der Ansprüche 1 bis 5, gekennzeichnet durch eine Einrichtung zum unabhängigen Steuern der Fließrate und Fließrichtung des unter Druck befindlichen gasförmigen Fluids in einer Rate, die ausreichend ist, die Kohleteilchen nahe dem Teil aus porösem Material zu fluidisieren, jedoch in einer Rate unterhalb derjenigen, bei welcher die Kohleteilchen oberhalb des porösen Materials fluidisiert werden würden.

7. Vorrichtung nach irgendeinem der Ansprüche 1 bis 6, dadurch gekennzeichnet, daß der Durchmesser der Abgabeöffnung (17) im Bereich von 4 mm bis 150 mm liegt für ein Gemisch aus pulverisierter Kohle und Gas, welches eine Suspensionsdichte von 200 bis 500 kg/m$^3$ hat.

FIG.1

FIG.2

FIG.3

FIG.4